Europäisches Patentamt

European Patent Office

Office européen des brevets

(11) Numéro de publication: **0 278 885**
**A1**

## (12) DEMANDE DE BREVET EUROPEEN

(21) Numéro de dépôt: **88440005.2**

(22) Date de dépôt: **02.02.88**

(51) Int. Cl.⁴: **H 05 K 3/34**
**B 23 K 3/06**

(30) Priorité: **12.02.87 FR 8701902**

(43) Date de publication de la demande:
**17.08.88 Bulletin 88/33**

(84) Etats contractants désignés:
**AT BE CH DE ES GB GR IT LI LU NL SE**

(71) Demandeur: **O.S.L. OUTILLAGES SCIENTIFIQUES ET DE LABORATOIRES S.A.**
**1ère avenue Zone Industrielle**
**F-06510 Carros Industries (FR)**

(72) Inventeur: **Sauvan, Gérard**
**La Palombière Chemin du Val Fleuri**
**F-06800 Cagnes Sur Mer (FR)**

(74) Mandataire: **Arbousse-Bastide, Jean-Claude**
**CABINET ARBOUSSE BASTIDE 20, rue de Copenhague**
**F-67000 Strasbourg (FR)**

(54) Installation pour la soudure à l'étain de circuits imprimés sur une plaque-support.

(57) Installation pour la soudure à l'étain fondu par le procédé dit "à la vague" de composants électroniques sur une plaque support, du type dans lequel lesdits composants se déplacent de manière à venir au contact d'une ride d'étain fondu à l'emplacement et pendant le temps voulu pour assurer cette soudure, caractérisé en ce que, en vue d'adapter la vitesse de déplacement de la vague à la vitesse de défilement des plaques, le bac contenant l'étain fondu comporte des moyens de basculement d'avant en arrière.

Fig 3

EP 0 278 885 A1

## Description

## INSTALLATION POUR LA SOUDURE A L'ETAIN FONDU DE COMPOSANTS ELECTRONIQUES SUR UNE PLAQUE SUPPORT

Cette invention concerne les installations de soudure automatique à l'étain des composants électroniques sur des plaques supports par le procédé dit "à la vague". Elle vise un certain nombre d'aménagements apportés à ces installations pour en améliorer le fonctionnement et notamment faciliter et rendre plus efficace l'élimination des oxydes d'étain polluant le bain d'étain fondu.

Selon un premier aménagement, des moyens sont prévus pour modifier la vitesse d'écoulement du bain, c'est-à-dire en fait la vitesse de déplacement de la vague en fonction de la vitesse de défilement des plaques.

Selon un second aménagement des moyens sont prévus pour empêcher le contact entre l'arbre rotatif de la turbine d'entraînement du bain et la zone superficielle dudit bain.

Selon un troisième aménagement, des moyens sont prévus pour créer un long cheminement du bain entre la zone de soudure et la zone de reprise par les turbines.

Selon un quatrième aménagement, des moyens sont prévus pour permettre le montage et le démontage aisé des buses d'alimentation créant la vague sur le bac contenant le bain, ces moyens évitant tout contact avec le bain lui-même.

Si l'on se réfère tout d'abord au premier aménagement précité, il convient tout d'abord de rappeler que, selon la nature des composants à souder, la vitesse de défilement des plaques peut varier entre d'assez larges limites, de l'ordre de 0,75 à 1,50 m/min. Or, selon le procédé dit "à la vague", la "vague" d'étain fondu créée par les buses utilisées dans ce type d'installation doit se déplacer à une vitesse correspondante de manière qu'il n'existe pas de vitesse relative entre les composants et ladite vague au moment de leur contact. Divers moyens ont déjà été proposés pour tenter de régler la vitesse de la vague, mais sans que les résultats obtenus soient satisfaisants. Selon l'invention, on obtient ce réglage d'une façon simple et efficace par simple modification de l'inclinaison du bac d'étain autour d'un axe horizontal parallèle à la vague, c'est-à-dire aux buses. Cet axe est situé à l'extérieur du bac, au-dessous de son arête inférieure, et peut lui-même être réglé pour présenter un parallélisme parfait à la vague. Au-dessous de l'arête inférieure opposée du bac est disposé un dispositif de réglage en hauteur, constitué par une colonette filetée pouvant être actionnée au moyen d'un moteur pas à pas. Il est facile d'établir la relation entre la variation de vitesse de défilement des plaques et la variation de hauteur de ladite colonette, c'est-à-dire le nombre de filets de la vis. Par ce moyen, il devient ainsi très facile d'assurer avec précision une synchronisation constante entre les déplacements des plaques et de la vague.

Si l'on se réfère au second aménagement, on rappellera que l'entraînement du bain d'étain fondu se fait au moyen d'une turbine tournant dans la partie inférieure du bain et qui envoie ce bain vers les buses créant la vague. Cette turbine est entraînée par un moteur situé au-dessous du bain, au moyen d'un arbre vertical qui traverse ainsi toute la hauteur du bain. On a constaté qu'au point de pénétration de cet arbre dans la surface du bain se créent des conditions favorables à une formation abondante d'oxydes d'étain pulvérulents dont la quantité peut être telle que ces oxydes soient aspirés par la turbine et envoyés dans les buses en même temps que l'étain fondu. Les particules d'oxydes ainsi présentes dans la vague sont à l'origine de défauts de soudures que l'on n'a jusqu'à présent pas réussi à éliminer. L'invention permet d'écarter cet inconvénient grâce à un manchon entourant l'arbre de la turbine au moins dans la zone de pénétration dans le bain, l'accès à l'intérieur de ce manchon étant interdit au bain grâce à un presse-étoupe en un matériau approprié assurant l'étanchéité entre la base du manchon et l'arbre de la turbine.

Si l'on se réfère maintenant au troisième aménagement, il vise également un moyen pour éviter que le bain repris par les turbines ne soit pollué par des oxydes d'étain. Ces oxydes se formant inévitablement par contact entre le bain et l'atmosphère ambiante, il convient d'en assurer le rassemblement en surface pour les éliminer par débordement. Toutefois ce rassemblement exige un certain temps, et du fait de la disposition des turbines de reprise au voisinage de l'une des extrémités des buses, le bain provenant de cette extrémité ne dispose pas d'un temps suffisant avant sa reprise pour que les oxydes qu'il contient puissent remonter en surface. Selon l'invention, pour allonger le temps de "repos" du bain à la sortie des buses, on allonge son trajet en plaçant une cloison entre la zone de reprise et l'extrémité des buses voisines de cette zone.

Enfin, selon le quatrième aménagement, l'ensemble des buses est monté sur une platine venant se placer à son emplacement habituel sur le dessus du bac, mais étant accrochée par un système approprié, de préférence du type "sauterelle", assurant la bonne adaptation de la platine sur son siège. Pour démonter les éléments des buses, il suffit donc de relever cette platine pour avoir accès à tous ces éléments, tout en demeurant à l'extérieur du bain.

On va maintenant décrire l'invention plus en détail en se référant à des exemples de réalisation de chacun des aménagements précités, donnés bien entendu à titre d'illustration sans aucun caractère limitatif.

Sur ce dessin :

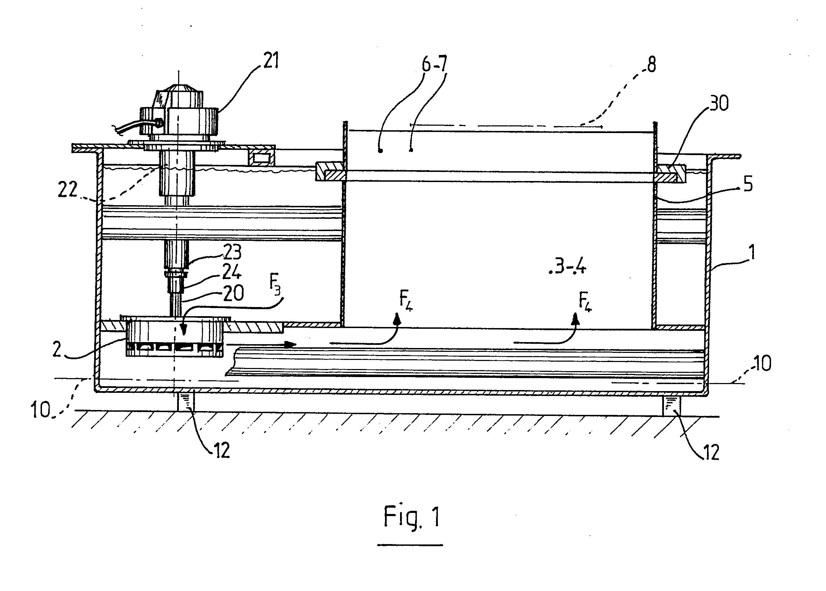

La figure 1 est une coupe verticale par l'axe longitudinal de l'ensemble de l'installation,

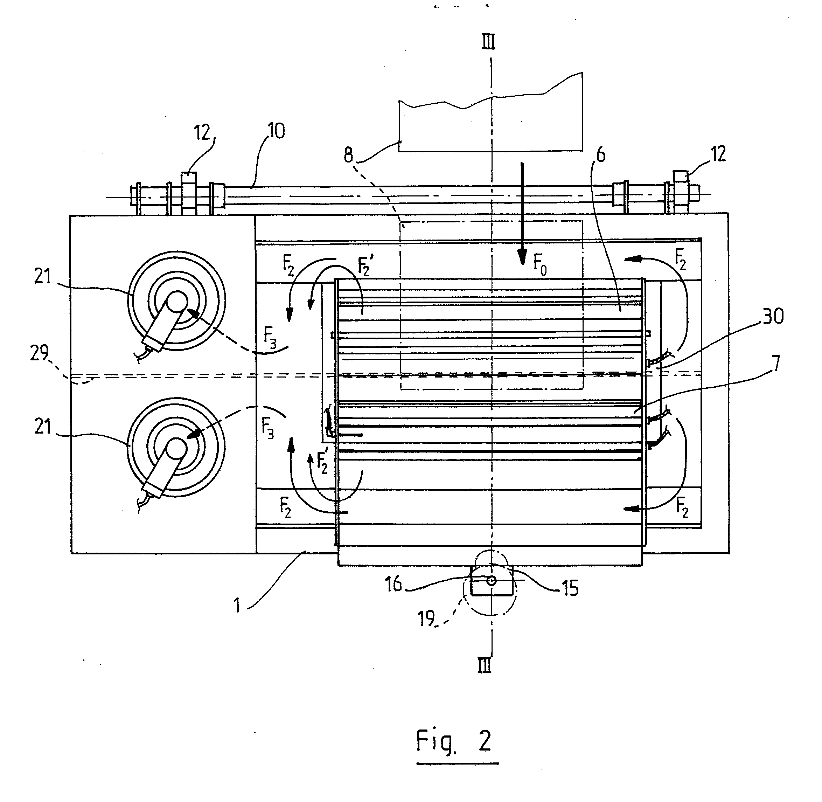

La figure 2 est une vue de dessus de la même installation,

La figure 3 est une coupe transversale du système de buses monté dans ladite installation, suivant III-III de la figure 2, et

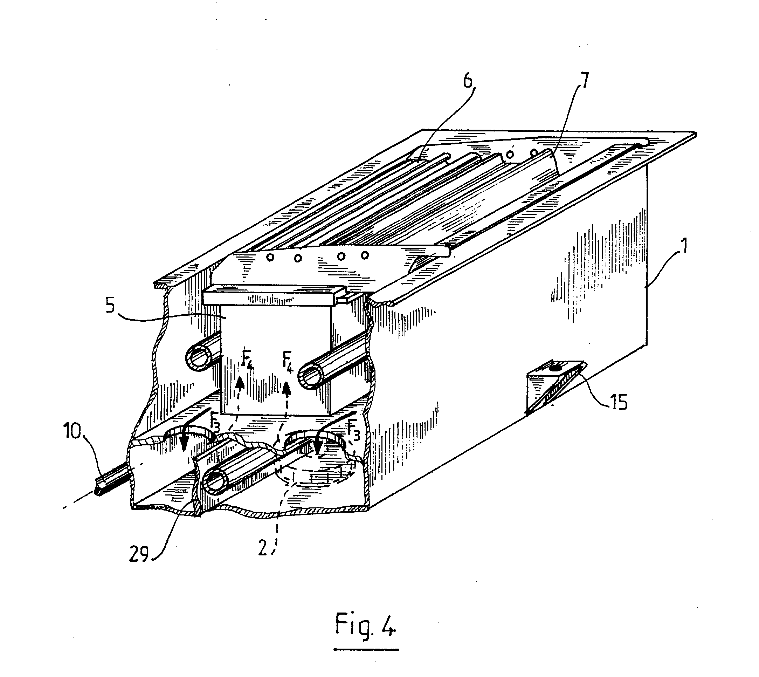

La figure 4 est une vue partielle en perspective du pot sur lequel sont montées les buses.

L'installation représentée est du type généralement connu, dans lequel un bac 1 contient une masse d'étain maintenue en fusion, et qui, maintenu en circulation par deux turbines 2, est envoyé dans la partie inférieure du pot 5 et expulsé vers le haut par des cheminées verticales 3 et 4 montées dans le pot 5 de manière à s'écouler dans le sens des flèches $F_1$ en créant des rides dénommées "vagues" (non représentées), parallèles à des buses 6, 7 fermant lesdites cheminées, et se déplaçant simultanément à des plaques 8 suivant un trajet X-X' portant des composants électroniques destinés à être soudés pour constituer des circuits, par contact ponctuel des bornes de ces composants avec lesdites rides. L'étain fondu est ensuite repris par les turbines 2 et ainsi de suite.

Il est important que les plaques 8 et les rides ou vagues se déplacent exactement à la même vitesse suivant la flèche Fo, faute de quoi l'étain assurant la soudure ne se répartit pas de manière uniforme autour des pattes ou bornes des composants, et forme des traînées à l'arrière. Or les plaques peuvent défiler à des vitesses très variables, pour de multiples raison bien connues des techniciens. Il est donc nécessaire de pouvoir modifier instantanément et à volonté la vitesse de déplacement des vagues et aucune solution satisfaisante n'a encore été proposée à ce problème.

L'invention apporte une telle solution par des moyens mécaniques simples, consistant à faire basculer le bac autour d'une arête inférieure parallèle aux buses.

Selon le mode de réalisation représenté, un axe de basculement 10 est installé sur des supports 12 comportant des moyens 11 pour le réglage du parallélisme de cet axe avec l'arête inférieure 13 du bac, pour éviter tout gauchissement.

A hauteur de l'arête inférieure opposée 14, le bac porte une patte filetée 15 coopérant avec un colonette filetée 16 montée rotative sur le socle de l'installation. A toute rotation de ladite colonette correspondra donc une modification de hauteur de la patte 15, et par suite un basculement, dans un sens ou l'autre, du bac autour de l'axe 10. Cette rotation peut être déterminée par un moteur électrique 19 du type pas à pas, assurant une grande précision à l'opération, en prenant en compte la relation entre le nombre de filets de la colonette et la vitesse de défilement des plaques 8, relation aisée à établir.

Ce mécanisme peut d'ailleurs être utilisé à d'autres fins, notamment dans une application à l'élimination des oxydes d'étain surnageant sur le bain, et qui, habituellement, sont évacués par simple débordement du bain. Un basculement relativement brusque et plus important déterminera une accélération passagère de ce débordement et une meilleure évacuation des oxydes.

Cette élimination des oxydes d'étain fait d'ailleurs l'objet d'un aménagement du système d'entraînement des turbines 2.

Ces turbines 2 sont, dans ce type d'installation, entraînées par des arbres 20 à partir de moteurs 21 placés à l'extérieur du bac et soigneusement isolés thermiquement.

Cet arbre traverse la surface du bain en fusion dans une zone 22 où l'étain fondu est amené à l'état de microparticules, particulièrement sensibles à l'oxydation. Il se forme donc dans cette zone une quantité considérable d'une poudre impalpable d'oxydes qui sont entraînés par l'aspiration de la turbine et renvoyés dans les cheminées 3 et 4, de sorte que ces particules sont à l'origine de défauts graves et inévitables dans les points de soudure.

On a bien tenté de remédier à cet inconvénient en entourant l'arbre 20 par un manchon concentrique 23. Toutfois, ce manchon étant ouvert à sa base, l'étain fondu remontait à l'intérieur, et le phénomène n'était pas éliminé.

L'invention permet de résoudre ce problème grâce à un aménagement du manchon 23, qui est muni à sa base d'un presse-étoupe 24 interdisant à l'étain l'accès de l'intérieur du manchon. Bien entendu le matériaux de ce presse-étoupe doit être approprié aux conditions sévères de fonctionnement, en milieu étain fondu vers 250° C. On a trouve qu'une résine fluorée, telle que celle vendue sous la marque commerciale "GORETEX" convient particulièrement à cet usage.

Grâce à cet aménagement, il ne se forme pratiquement pas de poudre d'oxydes d'étain dans la zone 22.

Il existe toutefois un troisième risque de pollution de la vague d'étain fondu par des particules d'oxydes d'étain.

En effet, les oxydes non évacués par débordement de la vague au-delà de la buse 7 sont entraînés par le courant de bain repris par les turbines 2, suivant les flèches $F_2$ - $F_3$ - $F_4$. Or, pour pouvoir être éliminés, lesdits oxydes, à l'origine en suspension dans le bain, doivent apparaître en surface. Si le bain est évacué vers l'extrémité gauche, suivant $F'_2$ le temps mis pour ce trajet n'est pas suffisant pour cette remontée, de sorte que les oxydes sont repris par $F_3$ et remis en circuit.

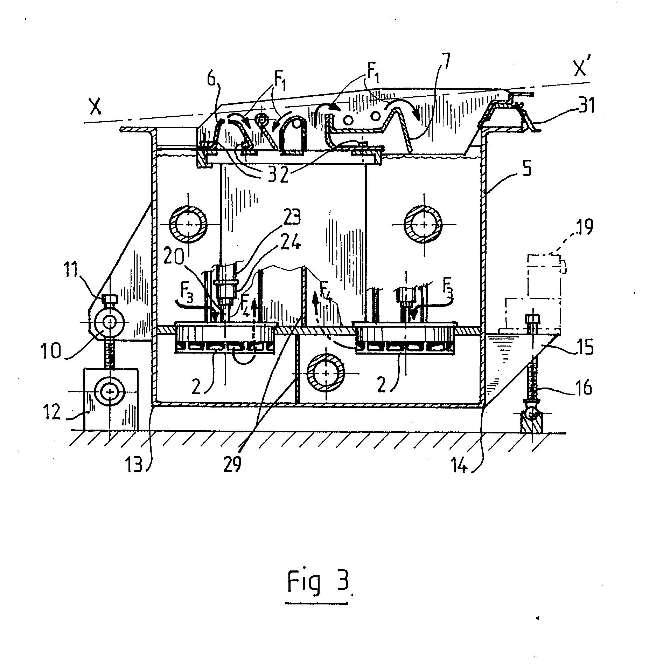

Pour éviter cet inconvénient, il est prévu, selon l'invention, qu'une cloison 29 s'étendant transversalement sur toute la hauteur du pot (voir figure 3), canalise le flux, interdisant le trajet $F'_2$ au bain, qui se trouve limité au trajet $F_a$, suffisamment long pour permettre la remontée en surfaxe des oxydes, permettant leur élimination.

Il apparaît ainsi clairement que les différents aménagement précités assurent l'élimination pratiquement totale des oxydes d'étain dans la vague, c'est-à-dire dans la portion utile du bain. Grâce à ces aménagements, pris séparément ou en combinaison, il devient donc possible d'obtenir des plaques de composants électroniques soudées pratiquement sans aucun défaut.

D'autres améliorations peuvent encore être apportées à ce type d'installation. Ainsi, les buses 6 et 7, au lieu d'être adaptées au pot 5 par des fixations immergées dans le bain d'étain, sont, selon l'invention, réunies sur une platine 30 qui vient exactement s'emboîter sur le dessus du pot 5, en étant plaquées et immobilisés sur le dessus des cheminées 3 et 4 par un système d'accrochage tel qu'un système à "sauterelle" tel qu'illustré en 31. Pour démonter les buses 6 et 7 par exemple, il suffit d'extraire cette platine, pour avoir accès aux organes de fixation 32, dans toucher au bain d'étain. Cela représente un important progrès technologique sur les systèmes antérieurs où la majorité des éléments étaient noyés dans le bain d'étain.

## Revendications

1. Installation pour la soudure à l'étain fondu par le procédé dit "à la vague" de composants électroniques sur une plaque support, du type dans lequel lesdits composants se déplacent de manière à venir au contact d'une ride d'étain fondu à l'emplacement et pendant le temps voulu pour assurer cette soudure, caractérisé en ce que, en vue d'adapter la vitesse de déplacement de la vague à la vitesse de défilement des plaques, le bac contenant l'étain fondu comporte des moyens de basculement d'avant en arrière.

2. Installation selon la revendication 1, caractérisée en ce que lesdits moyens consistent en un axe de basculement situé à la base dudit bac en arrière des buses d'éjection de la vague, et un élément d'appui à hauteur réglable situé face audit bac à l'opposé dudit axe.

3. Installation selon les revendications 1 et 2, caractérisé en ce que l'élément d'appui est une colonette filetée solidaire du bac et coopérant avec un organe fileté correspondant solidaire du socle de l'installation, ou inversement, la rotation de ladite colonette étant commandée par un moteur pas à pas en fonction de la vitesse de défilement des plaques.

4. Installation selon l'une quelconque des revendications 1 à 3, caractérisé en ce que l'arbre d'entraînement de la turbine assurant la circulation du bain d'étain fondu est entouré sur sa hauteur incluant le niveau de la surface dudit bain par un manchon obturé hermétiquement à sa partie inférieure.

5. Installation selon l'une quelconque des revendications 1 à 4, caractérisé en ce que l'espace de reprise de l'étain fondu à la sortie des buses créant les rides est obturé du côté de la zone de reprise par les turbines.

6. Installation selon l'une quelconque des revendications 1 à 5, caractérisée en ce que les buses de création des vagues sont montées sur une platine amovible venant s'adapter sur les cheminées d'amenée de l'étain fondu par des organes situés en totalité et en permanence à l'extérieur du bain d'étain fondu.

0278885

Fig. 1

Fig. 2

Fig 3.

Fig. 4

0278885

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | PATENT ABSTRACTS OF JAPAN, vol. 8, no. 73 (M-287)[1501], 5 avril 1984; & JP-A-58 218 369 (TOUSHIBA SEIKI K.K.) 19-12-1983 * Résumé * | 1-3,6 | H 05 K 3/34 B 23 K 3/06 |
| Y | Idem --- | 5 | |
| Y | EP-A-0 140 997 (SOLTEC) * Page 2, ligne 32 - page 4, ligne 28; figures 1,2 * --- | 5 | |
| A | US-A-3 773 242 (R. FITZSIMMONS) * Colonne 2, ligne 4 - colonne 4, ligne 6; figures 1-5 * --- | 1-6 | |
| A | FR-A-2 502 525 (ZEVATRON) * Page 8, ligne 29 - page 12, ligne 14; figures 1-8 * --- | 1-6 | |
| A | DE-B-1 157 458 (WESTERN ELECTRIC) * Colonne 2, ligne 31 - colonne 4, ligne 14; figures * --- | 1-6 | DOMAINES TECHNIQUES RECHERCHES (Int. Cl.4) |
| A | EP-A-0 186 538 (O.S.L.A.) * Résumé; figures 1,2 * --- | 1-6 | H 05 K B 23 K |
| A | DE-A-2 639 158 (EPM) * Revendications; figures 1,2 * --- | 1-6 | |
| A | US-A-3 092 059 (E. TESCH) * Revendications * ----- | 1-6 | |

Le présent rapport a été établi pour toutes les revendications

| Lieu de la recherche | Date d'achèvement de la recherche | Examinateur |
|---|---|---|
| LA HAYE | 07-04-1988 | GALLO G.G. |